# EUROPÄISCHE PATENTSCHRIFT

(11) **EP 0 907 479 B1**
(45) Veröffentlichungstag und Bekanntmachung des Hinweises auf die Patenterteilung: **22.08.2001**
(21) Anmeldenummer: 97923095.0
(22) Anmeldetag: 16.05.1997
(51) Int. Cl.: B29C 44/46

(54) **VERFAHREN UND VORRICHTUNG ZUR SCHAUMHERSTELLUNG MITTELS UNTER DRUCK GELÖSTEM KOHLENDIOXID**
PROCESS AND DEVICE FOR PRODUCING FOAM USING CARBON DIOXIDE DISSOLVED UNDER PRESSURE
PROCEDE ET DISPOSITIF POUR PRODUIRE DE LA MOUSSE AVEC DU DIOXYDE DE CARBONE DISSOUS SOUS PRESSION

(30) Priorität: 24.05.1996 DE 19620991
(43) Veröffentlichungstag der Anmeldung: 14.04.1999
(73) Patentinhaber: Hennecke GmbH, 51379 Leverkusen (DE); BAYER AG, 51368 Leverkusen (DE)
(72) Erfinder: SULZBACH, Hans-Michael, D-53639 Königswinter (DE); ALTHAUSEN, Ferdinand, D-53819 Neunkirchen-Seelscheid (DE); RAFFEL, Reiner, D-53721 Siegburg (DE); EIBEN, Robert, D-51061 Köln (DE); EBELING, Wilfried, D-51069 Köln (DE)
(74) Vertreter: Drope, Rüdiger, Dr.
(86) Internationale Anmeldenummer: EP9702521
(87) Internationale Veröffentlichungsnummer: WO9745240

(56) Entgegenhaltungen:
- EP-A- 0 444 224
- DE-A- 4 425 319
- DE-A- 4 442 254

## Beschreibung

Die vorliegende Erfindung betrifft ein Verfahren und eine Vorrichtung zur Herstellung von Schäumen mittels unter Druck gelöstem Kohlendioxid als Treibmittel, wobei die zu verschäumende Masse unter Druck mit vorzugsweise flüssigem Kohlendioxid vermischt und anschließend unter Schaumbildung entspannt wird. Als verschäumbare Massen werden insbesondere flüssige Ausgangsprodukte für Kunststoffe eingesetzt, die aufgrund einer nach dem Verschäumen einsetzenden Polyadditions- oder Polykondensationsreaktion zum Schaum-Kunststoff aushärten. Speziell bezieht sich die Erfindung auf Polyurethan-Schaumstoffe.

Bei der Herstellung von Polyurethan-Schaumstoffen wird mindestens eine der Reaktivkomponenten (Polyisocyanat und Isocyanat-reaktive Wasserstoffatome aufweisende Verbindungen, insbesondere Polyole) mit einem flüssigen oder gasförmigen Treibmittel versetzt, danach mit der anderen Komponente vermischt und die erhaltene Mischung entweder diskontinuierlich in eine Form oder kontinuierlich auf ein Transportband gefördert, wo die Mischung aufschäumt und aushärtet.

Zur Erzeugung des Schaums hat ein Reihe von Verfahren breite Anwendung in der Technik gefunden. Einerseits werden bei niedriger Temperatur verdampfende Flüssigkeiten wie niedermolekulare Chlorfluorkohlenwasserstoffe, Methylenchlorid, Pentan usw. eingesetzt, die aus der noch flüssigen Reaktivmischung verdampfen und Bläschen bilden (physikalische Schaumerzeugung). Ferner kann in die Reaktivmischung bzw. in eine der Komponenten Luft eingeschlagen werden (mechanische Schaumerzeugung), und schließlich wird bei Polyurethan-Schäumen Wasser als Treibmittel der Polyolkomponente zugesetzt, das nach Vermischung mit der Isocyanatkomponente durch Reaktion mit dem Isocyanat Kohlendioxid als Schäumgas freisetzt (chemische Schaumerzeugung).

Aus Gründen der Umweltverträglichkeit, der Arbeitshygiene und aufgrund der vergleichsweise hohen Löslichkeit von flüssigem Kohlendioxid in der Polyolkomponente wurde flüssiges Kohlendioxid bereits vielfach als Treibmittel vorgeschlagen (GB-A 803 771, US-A 3 184 419, US-A 3 220 801). Jedoch haben diese alten Vorschläge bisher keinen Eingang in die Technik gefunden, offenbar aufgrund der Schwierigkeiten bei der erforderlichen Entspannung der Reaktivmischung von Drücken zwischen 10 und 20 bar gleichmäßige Schäume zu erzeugen. Dabei besteht das Problem einerseits darin, daß unmittelbar nach der Entspannung das Kohlendioxid relativ plötzlich verdampft, so daß eine sehr starke Volumenvergrößerung der Reaktionsmischung um einen Faktor von beispielsweise ca. 10 erfolgt, die schwer zu beherrschen ist, und andererseits die Reaktivmischung zu Freisetzungsverzügen des Kohlendioxids neigt, die 3 bis 6 bar unterhalb des Gleichgewichtsdampfdrucks von CO₂ bei der jeweiligen Temperatur liegen können, so daß es zu plötzlichen explosionsartigen Kohlendioxidfreisetzungen kommt, mit der Folge, daß große Blasen oder Lunker in den Schaumstoff eingeschlossen sind.

Zur Erzeugung einer gleichmäßigen Schaumstruktur ist es ferner bekannt, feinteilige Luft- oder Stickstoffblasen in die flüssige Reaktivmischung einzubringen, die als Blasenkeime dienen, so daß eine lokale Übersättigung an physikalisch gelöstem oder chemisch erzeugtem Treibmittel verhindert wird.

Allerdings besteht beim Einsatz von physikalisch gelöstem Kohlendioxid als Treibmittel das Problem, daß die Freisetzung des Kohlendioxids innerhalb von Zeiträumen erfolgt, in denen die Polyadditionsreaktion kaum fortschreitet, so daß der nach Freisetzung des Kohlendioxids erhaltene Froth noch sehr empfindlich gegen Beanspruchung durch Scherkräfte ist. Auf den Froth ausgeübte Scherkräfte führen zur Zerstörung von Schaumblasen, so daß größere Schaumblasen gebildet werden und eine ungleichmäßige Schaumstruktur entsteht. Dies ist insbesondere dann der Fall, wenn die Schaumblasen einen Durchmesser erreichen, bei dem die Blasenform von der Kugelform abweicht, d.h. wenn das Blasenvolumen im Froth einen Raumanteil einnimmt, der größer ist, als der dichtesten Kugelpackung entspricht. Ein Blasenvolumen, das der dichtesten Kugelpackung entspricht, wird erreicht, wenn 0,5 Gew.-Teile Kohlendioxid bezogen auf 100 Gew.-Teile Reaktivmischung bei Atmosphärendruck freigesetzt sind.

Bei der kontinuierlichen Herstellung von Schaumstoffblöcken (siehe Becker/Braun, Kunststoff Handbuch, Band 7: Polyurethane, 1993, Bild 4.8 und 4.9, Seite 148) kann das Aufbringen des Froth auf das Transportband und seine Verteilung über die Breite des Transportbandes als problematisch für den Froth angesehen werden.

Zur Überwindung des Ablage- und Verteilungsproblems des Froth auf dem Transportband wurde gemäß EP-A 645 226, die den Oberbegriff des Anspruchs 1 zeigt, vorgeschlagen, die Kohlendioxid unter Druck gelöst enthaltende Polyurethan-Reaktivmischung zunächst druckseitig über die Breite des Transportbandes in einer sogenannten Druckausgleichskammer zu verteilen, den Druck anschließend in einer sich über die Breite des Transportbandes erstreckenden Druckabbauzone, die in Form eines einen ausreichenden Strömungswiderstand zur Verfügung stellenden, sich über die Breite des Transportbandes erstreckenden Spaltes oder einer Reihe von Durchgangsbohrungen ausgebildet ist, abzubauen und anschließend eine sich in Strömungsrichtung erweiternde, quer über das Transportband erstreckende Aufschäumkammer vorzusehen, aus der der Froth mit an die Transportbandgeschwindigkeit angepaßter Fließgeschwindigkeit austreten soll. Nachteilig bei diesem Vorschlag ist die zu geringe Strömungsgeschwindigkeit der Reaktivmischung in der großvolumigen Druckausgleichskammer, die vergleichsweise lange Verweilzeit des Froth in der Aufschäumkammer, das relativ große Verhältnis von Aufschäumkammerwand und Aufschäumkammerquerschnitt und die Schwierigkeit, Unterschiede der Fließgeschwindigkeit des Froth am Ausgang der Aufschäumkammer und des Transportbandes zu vermeiden. Insbesondere können aufgrund der von der unteren Begrenzungswand der Aufschäumkammer sowie am Übergang von Aufschäumkammer zu Transportband durch Scherung des Froth erzeugte vergrößerte Schaumblasen nicht mehr durch Aufplatzen und Abgabe des eingeschlossenen Gases an die Umgebung verschwinden, da sie vom Froth überdeckt sind. Vielmehr wandern solche an der Unterseite der Froth-Masse erzeugte vergrößerte Gasblasen während der zunehmenden Polyadditionsreaktion in den Froth hinein und werden in den erzeugten Schaum eingeschlossen.

Gemäß DE-A 44 22 568, DE-A 44 25 317 und DE-A 44 25 319 wurden bereits kompakte Schäumvorrichtungen vorgeschlagen, die weder eine ausgedehnte Druckausgleichskammer mit langen Strömungswegen noch eine Aufschäumkammer aufweisen.

Nach einem Vorschlag der Anmelderin gemäß EP-A-794 857, der zum Stand der Technik gemäβ Artikel 54(3) EPÜ gehört, erfolgt zur Reduktion der Strömungsgeschwindigkeit der Polyurethan-Reaktivmischung nach dem Austritt aus der Druckentspannungszone eine Geschwindigkeitsreduktion durch Umlenkung an einer Prallfläche.

Unbefriedigend bei den bekannten Schäumvorrichtungen ist immer noch die zu geringe Standzeit, die dadurch bedingt ist, daß unvermeidbare Feststoffpartikel, die entweder mit den Rohstoffen für die Reaktivmischung aus Vorratsbehältern und Rohrleitungen in die Reaktivmischung eingetragen werden, oder abgelöste Anbackungen von Polyurethan aus der Mischkammer, der Zuführung zur Schäumvorrichtung usw. den engen Querschnitt der Druckentspannungszone verstopfen können. Das Problem tritt dann verstärkt auf, wenn die Reaktivmischung feinteilige Feststoffe, z.B. Farbpigmente, Melamin oder Recyclingpulver enthält, selbst dann, wenn die Teilchengröße der Feststoffe erheblich unterhalb der Abmessung der Druckentspannungszone liegen.

Gegenstand der vorliegenden Erfindung ist ein Verfahren zur kontinuierlichen Herstellung von Blockschaum durch Verschäumen einer Kohlendioxid unter Druck gelöst enthaltenden Polyurethan-Mischung, wobei der Druck der Reaktivmischung beim Durchgang durch eine spaltförmige Entspannungszone abgebaut wird, das dadurch gekennzeichnet ist, daß die Entspannungszone in Form eines oder mehrerer koaxialer Ring-Spalte ausgebildet ist und die Geschwindigkeit der Reaktivmischung nach dem Durchgang durch den oder die Ringspalte in einer oder mehreren koaxialen ringspaltförmigen Geschwindigkeitsreduktionszonen reduziert wird.

Gegenstand der vorliegenden Erfindung ist ferner eine Vorrichtung gemäβ Anspruch 8.

Vorzugsweise werden die die Druckentspannungszone bildenden Spaltbegrenzungsflächen zumindest zeitweilig gegeneinander bewegt.

Durch die Relativbewegung der beiden Spaltbegrenzungsflächen eines Spaltes werden evtl. im Spalt festsitzende Feststoffpartikel unter der gleichzeitigen Wirkung der mit hoher Geschwindigkeit den Spalt durchströmenden Reaktivmischung durch den Spalt gefördert, so daß eine Verstopfung vermieden wird.

Die Relativbewegung der Spaltbegrenzungsflächen kann periodisch mit hoher Frequenz erfolgen, indem z.B. auf mindestens eine der Spaltbegrenzungsflächen eine Ultraschallschwingung übertragen wird.

Die Relativbewegung kann auch so erfolgen, daß der Spalt kurzzeitig weiter geöffnet oder kurzzeitig verengt wird.

Ist die Entspannungszone in Form eines oder mehrerer konzentrischer Ringspalte ausgebildet, kann die Relativbewegung der Spaltbegrenzungsflächen durch eine rotierende Bewegung der einen Spaltbegrenzungsfläche gegen die andere bewirkt werden. Die Bewegung der Spaltbegrenzungsflächen gegeneinander kann ständig, periodisch oder intermittierend erfolgen.

Im Falle rotationssymmetrischer Spalte werden die Spaltbegrenzungsflächen vorzugsweise ständig mit einer Rotationsgeschwindigkeit von 1 bis 60 U/min, besonders bevorzugt 1 bis 10 U/min, gegeneinander bewegt.

Im Falle der Bewegung durch Ultraschallanregung ist eine intermittierende Bewegung bevorzugt.

Nach einer weiter bevorzugten Ausführungsform der vorliegenden Erfindung ist die Spaltbreite verstellbar ausgebildet. Vorzugsweise ist am Ausgang der Mischkammer, dem Verbindungsrohr zwischen Mischkammer und Schäumvorrichtung oder in der Verteilungskammer der Schäumvorrichtung eine Druckmeßsonde vorgesehen, die auf die Verstellvorrichtung für die Spaltbreite wirkt, so daß der Druck der Polyurethan-Reaktivmischung vor dem Durchgang durch die Druckentspannungszone, d.h. durch den Spalt, durch Regelung der Spaltbreite konstant gehalten werden kann.

Nach einer bevorzugten Ausführungsform der Erfindung wird die Strömungsrichtung der Reaktivmischung nach ihrem Austritt aus der Druckentspannungszone um einen Winkel von mindestens 90°, vorzugsweise zwischen 90° und 150°, umgelenkt, wobei der Strömungsquerschnitt nach der Umlenkung 5- bis 30-mal, insbesondere bevorzugt 10- bis 20-mal größer ist, als der Strömungsquerschnitt der Druckentspannungszone. Diese sich an die Druckentspannungszone anschließende Geschwindigkeitsreduktionszone ist naturgemäß ebenfalls spaltförmig ausgebildet. Ihre Ausdehnung in Strömungsrichtung soll so gestaltet sein, daß in dieser Geschwindigkeitsreduktionszone aufgrund der Relaxationszeit für die Kohlendioxidfreisetzung im wesentlichen noch keine Kohlendioxidfreisetzung erfolgt.

Die Ausdehnung der Druckentspannungszone in Durchströmrichtung, d.h. die Spaltlänge, kann 1 bis 20 mm betragen, insbesondere 2 bis 10 mm, besonders bevorzugt 3 bis 8 mm. Die Spaltbreite der Druckentspannungszone, d.h. der Abstand der Spaltbegrenzungsflächen, kann zwischen 0,1 und 0,5 mm betragen, je nach Viskosität der Polyurethan-Reaktivmischung und deren Zufuhrrate. Bei Einsatz einer füllstoffhaltigen Polyurethan-Reaktivmischung sind Spaltbreiten von 0,2 bis 0,5 mm bevorzugt.

Die Durchtrittsgeschwindigkeit der Reaktivmischung durch die Druckentspannungszone ist abhängig von der Ausdehnung der Druckentspannungszone in Strömungsrichtung, der Spaltbreite, der Viskosität der Reaktivmischung sowie dem in der Druckverteilungskammer herrschenden Druck, der oberhalb des Sättigungsdampfdruckes für das gelöste Kohlendioxid liegen muß. Typische Durchtrittsgeschwindigkeiten können zwischen 10 und 25 m/sec, liegen. Für die Verschäumung von Reaktivmischungen mit hohem Kohlendioxidgehalt, z.B. im Bereich zwischen 3 und 6 Gew.-% Kohlendioxid, werden hohe Durchtrittsgeschwindigkeiten durch die Druckentspannungszone, z.B. zwischen 15 und 25 m/sec, bevorzugt, so daß sich kurze Verweilzeiten in der Schäumvorrichtung ergeben.

Die der erfindungsgemäßen Verschäumvorrichtung zuzuführende Polyurethan-Reaktivmischung wird wie folgt hergestellt:
Als Isocyanatkomponente werden aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben sind, eingesetzt.
Bevorzugt eingesetzt werden aromatische Polyisocyanate, besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat ableiten.

Als zweite Komponente ("Polyolkomponente") werden Verbindungen mit mindestens zwei gegenüber Isocyanaten reaktionsfähigen Wasserstoffatomen mit Molekulargewichten von in der Regel zwischen 60 und 5000, vorzugsweise zwischen 100 und 2000, besonders bevorzugt zwischen 200 und 800. Hierunter versteht man neben Aminogruppen, Thiolgruppen oder Carboxylgruppen aufweisenden Verbindungen vorzugsweise Hydroxylgruppen aufweisende Verbindungen, insbesondere 2 bis 8 Hydroxylgruppen aufweisende Verbindungen, speziell solche mit Molekulargewichten zwischen 200 und 2000, vorzugsweise 300 bis 1200, z.B. mindestens 2, in der Regel 2 bis 8, vorzugsweise aber 2 bis 6, Hydroxylgruppen aufweisende Polyester, Polyether, Polythioether, Polyacetale, Polycarbonate und Polyesteramide, wie sie für die Herstellung von Polyurethan-Schäumen an sich bekannt sind; ganz besonders bevorzugt sind Polyetherpolyole.

Für den Einsatz als Polyolkomponente geeignete Verbindungen sind auf den Seiten 6 bis 9 der EP-B 121 850 beschrieben.

Ferner können zur Herstellung der Reaktivmischung gegebenenfalls Wasser, weitere Treibmittel, Schaumstabilisatoren, Katalysatoren, Füllstoffe, Farbpigmente, Melaminpulver, Kunststoffrecyclingpulver, sowie sonstige an sich bekannte Hilfs- und Zusatzstoffe eingesetzt werden. Diese an sich bekannten, weiter einsetzbaren Mittel sind auf Seiten 9 bis 11 der EP-B 121 850 offenbart.

Insbesondere bevorzugt wird erfindungsgemäß Wasser als zusätzliches Treibmittel in einer Menge von besonders bevorzugt 1 bis 7 Gew.-%, bezogen auf die Reaktivmischung, mitverwendet. Bevorzugt wird Wasser in einer Menge von 2 bis 5 Gew.-% mitverwendet.

Die zusätzlich einsetzbaren Mittel können dem Mischaggregat zur Vermischung von Isocyanatkomponente und Polyolkomponente getrennt zugeführt werden oder aber bereits vor der Vermischung von Isocyanat mit Polyol einer der beiden Hauptkomponenten zugeführt werden, wobei das mitverwendete Wasser und weitere eventuell mit Isocyanat reagierende Zusatzkomponenten nur der Polyolkomponente zugemischt werden dürfen.

Die Verfahrenstechnik zur Herstellung von Polyurethan-Schäumen ist prinzipiell in Becker/Braun, Kunststoff Handbuch, Band 7: Polyurethane, 1993, Seiten 143 bis 149, insbesondere in Bild 4.8 und Bild 4.9 auf Seite 148 dargestellt.

Vorzugsweise werden die Komponenten in einer sogenannten Niederdruck-Rührwerksmischkammer vermischt, wobei erfindungsgemäß in der Mischkammer ein Druck herrscht, der oberhalb des Sättigungsdampfdruckes für das gelöste Kohlendioxid liegt.

In einer oder mehreren der Komponenten, insbesondere der Polyolkomponente, wird vor der Einleitung der Komponenten in den Mischkopf Kohlendioxid gelöst.

Vorzugsweise wird Kohlendioxid in einer Menge von 1 bis 7 Gew.-%, vorzugsweise 2 bis 5 Gew.-%, bezogen auf die Gesamt-Reaktivmischung gelöst.

Ferner kann Luft und/oder Stickstoff zur Unterstützung der Blasenkeimbildung in einer der Komponenten dispergiert oder gelöst werden.

Die Auflösung des Kohlendioxids, vorzugsweise nur in der Polyolkomponente, kann auf beliebige Weise erfolgen, z.B.
a) gasförmiges Kohlendioxid wird in einen die Polyolkomponente enthaltenden Behälter, der bei einem Druck von 15 bis 25 bar gehalten wird, in das Polyol mittels eines Rührwerks eingemischt;
b) flüssiges Kohlendioxid wird bei Raumtemperatur z.B. in einem Statikmischer bei einem Druck von 70 bis 80 bar mit dem Polyol vermischt und anschließend vor der Einführung in den Niederdruck-Rührwerksmischkopf auf einen Druck von 15 bis 25 bar entspannt;
c) flüssiges, auf z.B. -20°C abgekühltes Kohlendioxid wird bei einem Druck von 15 bis 25 bar mit der bei Raumtemperatur befindlichen Polyolkomponente vermischt, wobei die Vermischung derart erfolgt, daß das Kohlendioxid in der Polyolkomponente gelöst wird, bevor es verdampfen kann.

Es wurde gefunden, daß insbesondere die bevorzugte Alternative c) aufgrund der hohen Neigung des Kohlendioxids, in Lösung zu gehen, mittels eines schnellaufenden Durchflußrührers, der in der Polyolleitung an der Einleitstelle für das flüssige Kohlendioxid angeordnet ist, gelingt.

Die Komponenten des Reaktivkunststoffs, von denen mindestens eine das gelöste Kohlendioxid enthält, werden nun dem Mischkopf zugeführt, hier vermischt und nach dem Austritt aus dem Mischkopf der erfindungsgemäßen Verschäumvorrichtung zugeführt.

Die Erfindung wird nachfolgend anhand der Figuren 1 bis 11 näher erläutert:
- Fig. 1: zeigt in schematisierter Seitenansicht eine Gesamtansicht einer Vorrichtung zur Durchführung des erfindungsgemäßen Verfahrens
- Fig. 2: zeigt eine erste Ausführungsform der erfindungsgemäßen Schäumvorrichtung
- Fig. 3 und 4: zeigen alternative Ausführungsformen des Details Z aus Fig. 2.
- Fig. 5: zeigt eine zweckmäßige Ergänzung zu einer rotationssymmetrischen Schäumvorrichtung
- Fig. 6: zeigt eine Schäumvorrichtung mit konzentrischen Ringspalten
- Fig. 7, 8 und 9: zeigen alternative Ausführungsformen des Details X (Entspannungszone) aus Fig. 6
- Fig. 10 und 11: zeigen eine erfindungsgemäße Schäumvorrichtung mit mehreren parallelen Spalten.

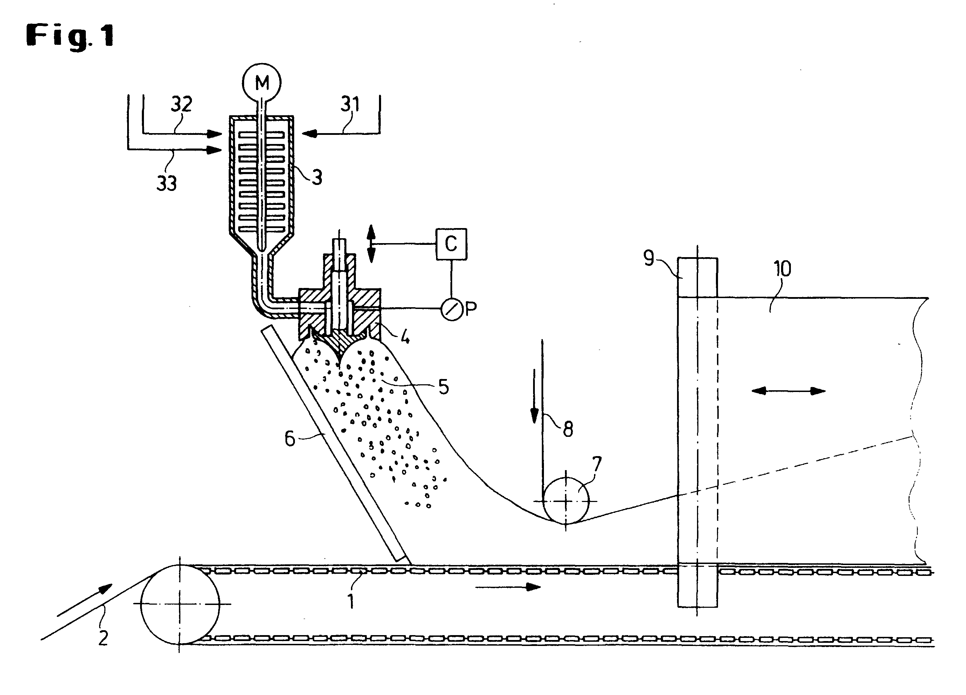

In Fig. 1 ist in Seitenansicht das Transportband 1 einer Blockschaumanlage dargestellt. Dem Transportband 1 wird eine untere Kaschierfolie 2 zugeführt, die mit dem Transportband bei einer Geschwindigkeit von 3 bis 7 m/min nach rechts bewegt wird. Dem Mischaggregat 3 werden unter Druck Isocyanat 31 und Polyol 32, das 3 bis 7 Gew.-% Kohlendioxid gelöst enthalten kann, sowie weitere Zusatz- und Hilfsstoffe 33 zugeführt. Im Mischaggregat herrscht ein Druck, der oberhalb des Lösungsdampfdrucks für das gelöste Kohlendioxid liegt. Aus dem Mischaggregat 3 wird die Reaktionsmischung der Schäumerzeugungsvorrichtung 4 zugeführt. Aus der Schäumvorrichtung 4 tritt die teilweise aufgeschäumte, an Kohlendioxid übersättigte Reaktionsmischung als Froth 5 frei fließend in Richtung auf das Transportband 1 aus. Der sich unterhalb der kreissymmetrischen Aufschäumvorrichtung 4 bildende Frothhaufen 5 verteilt sich zunächst frei fließend über die Breite des Transportbandes, wobei zur Vermeidung des Fließens entgegen der Bewegungsrichtung des Transportbandes eine im wesentlichen senkrechte Barriere 6 vorgesehen ist, die sich quer über das Transportband erstreckt. In Bewegungsrichtung des Transportbandes im Abstand von der Zufuhrstelle des Froth 5 wird die obere Kaschierfolie 8 über eine in den Froth eintauchende Umlenkrolle 7 zugeführt. Ferner werden beidseitig des Transportbandes seitliche Kaschierfolien 10 über Umlenkrollen 9 zugeführt.

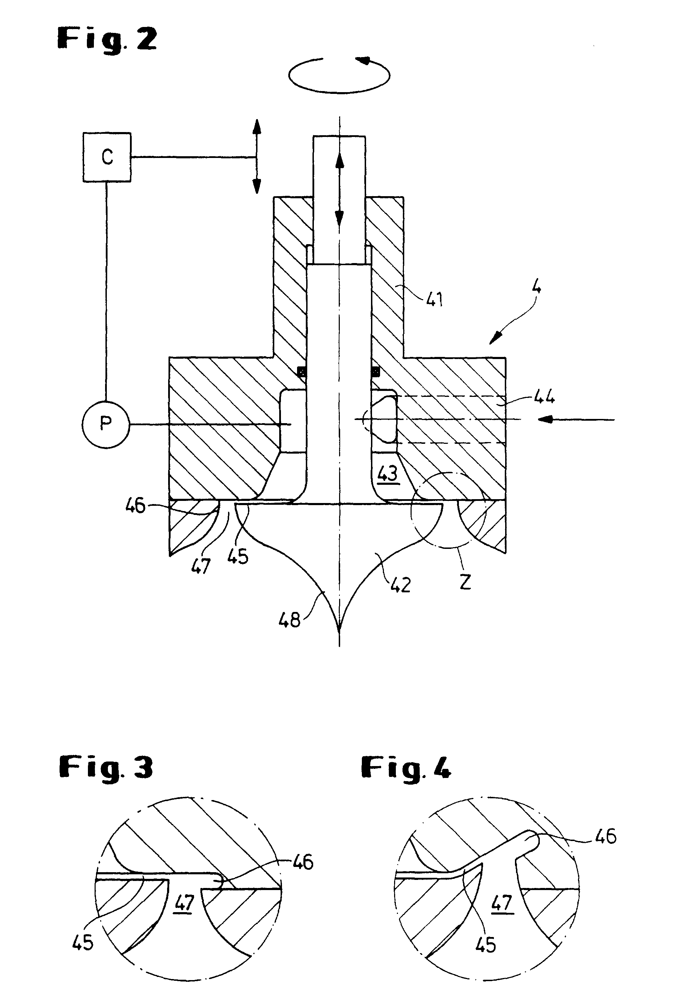

Die erfindungsgemäße Schäumvorrichtung 4 gemäß Fig. 2 besteht aus einem rotationssymmetrischen Gehäuse 41 und einem rotationssymmetrischen Zentralkörper 42, die eine Gemischverteilkammer 43 einschließen, wobei der Gemischverteilkammer das Polyurethan-Reaktivgemisch über eine tangentiale Bohrung 44 zugeführt wird. Gehäuse 41 und Zentralkörper 42 bilden ferner den die Druckentspannungszone darstellenden Spalt 45, durch den das Gemisch aufgrund des herrschenden Druckes mit hoher Geschwindigkeit hindurchgedrückt wird. Der sich rotationssymmetrisch nach außen ausbreitende Gemischstrom trifft auf die Prallfläche 46 auf, wobei die Geschwindigkeit in der Geschwindigkeitsreduktionszone 47 entsprechend dem gegenüber dem Spalt 45 größeren Querschnitt turbulent abgebaut wird. Anschließend schäumt die Reaktivmischung unter Freisetzung des gelösten Kohlendioxids auf, wobei der Raum unter der Schäumvorrichtung entlang der Kontur 48 des Zentralkörpers 42 und im übrigen frei fließend ausgefüllt wird. Der Zentralkörper 42 weist einen Rotationsantrieb auf, so daß die durch den Zentralkörper zur Verfügung gestellte Spaltbegrenzungsfläche gegen die durch das Gehäuse zur Verfügung gestellte Spaltbegrenzungsfläche bewegt werden kann und evtl. sich im Spalt absetzende Partikel durch den Spalt ausgetrieben werden. Ferner ist vorgesehen, daß der Zentralkörper 42 in axialer Richtung verschiebbar ist, so daß die Breite des Spaltes 45 einstellbar ist. Dies kann derart erfolgen, daß die Abweichung von dem vorbestimmten Druck in der Verteilkammer 43 mittels eines Druckmeßgerätes P gemessen wird und über eine Kontrolleinheit C der Antrieb für die axiale Verschiebung des Zentralkörpers gesteuert wird.

Das vergrößerte Detail Z aus Fig. 2 gemäß Fig. 3 zeigt die Ausbildung der Prallfläche 46 für die Einleitung des turbulenten Geschwindigkeitsabbaus in Form einer rotationssymmetrischen Ausnehmung in der Geschwindigkeitsreduktionszone 47.

Das vergrößerte Detail Z aus Fig. 2 gemäß Fig. 4 zeigt eine Ausführungsform, bei der der Geschwindigkeitsabbau in der Geschwindigkeitsreduktionszone 47 durch Umlenkung um 135° erfolgt.

Wie Fig. 2 zeigt, gleitet die aufschäumende Polyurethan-Reaktivmischung an der Kontur 48 des Zentralkörpers 42 entlang, wobei der Raum unterhalb der ringspaltförmigen Geschwindigkeitsreduktionszone 47 ausgefüllt wird. Dabei besteht insbesondere bei Schäumvorrichtungen größerer Abmessung, d.h. für höhere Durchsätze an Polyurethan-Reaktivmischung, das Risiko, daß während des Abgleitens an der Kontur 48 bereits vorhandene Schaumblasen zerstört werden, wodurch gelegentlich größere Lunker entstehen, die (Fig. 1) nicht mehr aus der auf dem Transportband 1 abgelegten Schaummasse 5 an die Oberfläche wandern können. Zur Vermeidung des Einschlusses solcher vergrößerten Schaumblasen kann erfindungsgemäß vorgesehen werden, den zunächst in Form eines rotationssymmetrischen Stromes entstehenden Flüssigschaum (Froth) entlang einer radial sich in Strömungsrichtung erstreckenden Ebene zu teilen.

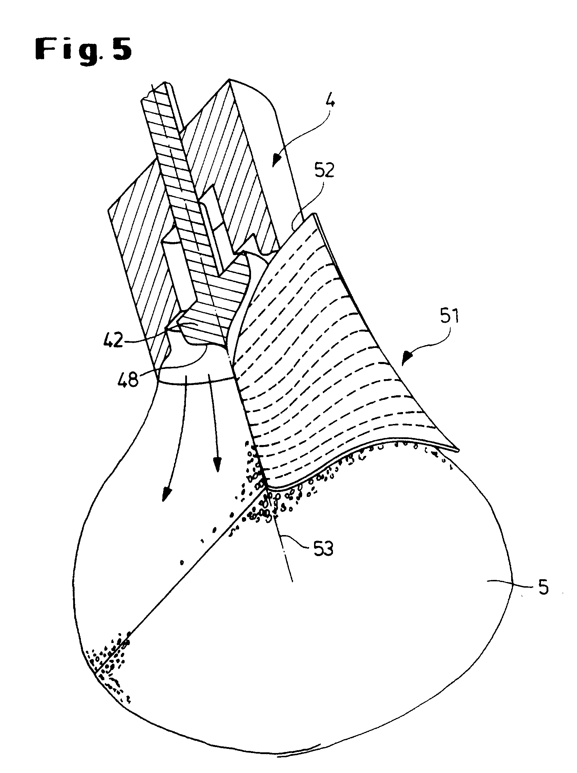

Fig. 5 zeigt den perspektivischen Halbschnitt aus einer erfindungsgemäßen Schäumvorrichtung 4, den Froth-Strom 5 sowie eine Froth-Teilungsvorrichtung 51. Die der Schäumvorrichtung 4 zugewandte Kante 52 der Teilungsvorrichtung 51 schneidet den Froth im wesentlichen radial auf und nimmt danach eine Kontur ein, die durch die gestrichelten Linien angedeutet ist. Nachdem der Schaumstrom 5 in seiner Achse 53 derart geteilt ist, können größere Schaumblasen, die sich entlang der Kontur 48 des Zentralkörpers 42 gebildet haben, an die Oberfläche entweichen.

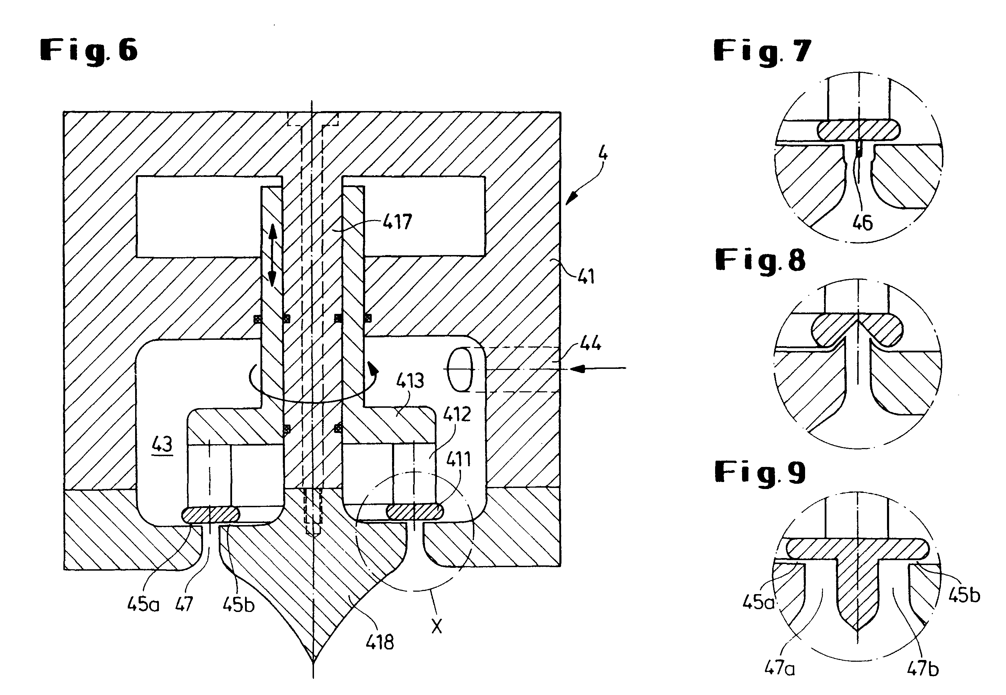

Die erfindungsgemäße Schäumvorrichtung gemäß Fig. 6 weist zwei konzentrische Druckentspannungszonen in Form von Ringspalten 45a und 45b auf. Mit dem Gehäuse 41 der Schäumvorrichtung 4 ist der Zentralkörper 418 fest verbunden. Die eine Begrenzungsfläche der Ringspalte 45a und 45b wird durch eine Scheibe 411 gebildet, die über drei bis sechs Stützen 412 an der Hülse 413 befestigt sind. Die Hülse 413 ist um die Achse 417 des Zentralkörpers 418 drehbar aus der Verteilkammer 43 herausgeführt. Im übrigen bezeichnen gleiche Ziffern gleiche Elemente wie in Fig. 2. Die Umlenkung der aus den Ringspalten 45a und 45b austretenden Reaktivmischungsströme erfolgt dadurch, daß diese aufeinanderprallen. Ihre Geschwindigkeit wird in der gemeinsamen Geschwindigkeitsreduktionszone 47 reduziert. Alternativ zeigt das Detail X aus Fig. 6 gemäß Fig. 7 einen Steg 46, der die Funktion der Prallfläche übernimmt.

Die alternative Ausführungsform des Details X aus Fig. 6 gemäß Fig. 8 zeigt eine 135°-Umlenkung um Anschluß an die Druckreduktionszone.

Nach der alternativen Ausführungsform des Details X aus Fig. 6 gemäß Fig. 9 sind getrennte Geschwindigkeitsreduktionszonen 47a und 47b vorgesehen.

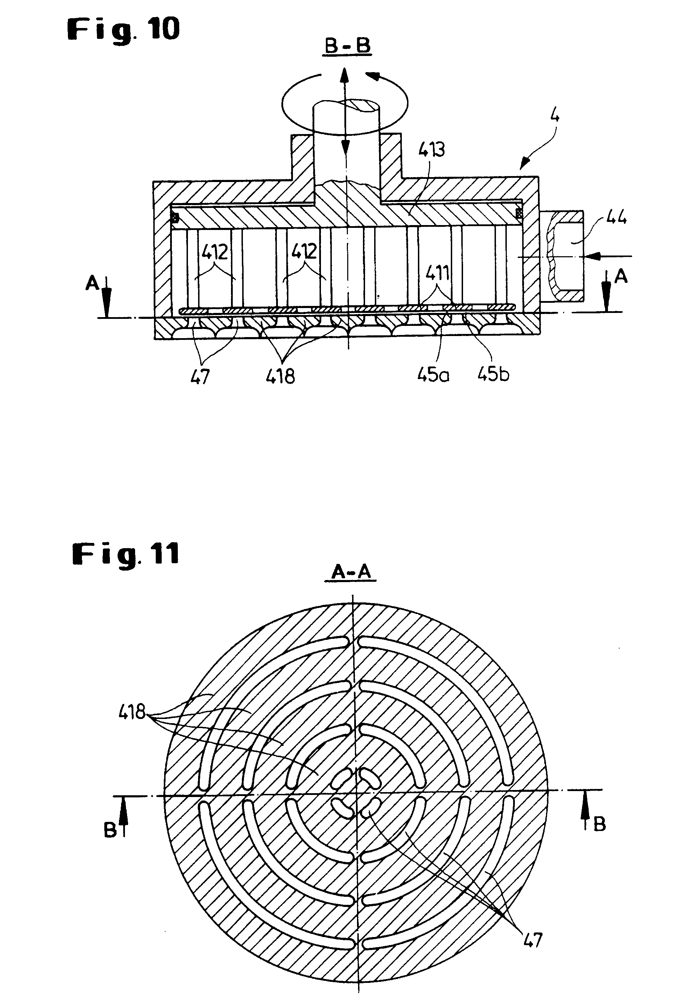

Fig. 10 und 11 zeigen eine erfindungsgemäße Schäumvorrichtung mit einer Vielzahl von konzentrischen Druckentspannungszonen 45 und entsprechenden Geschwindigkeitsreduktionszonen 47. Fig. 10 stellt einen Schnitt B-B durch die Darstellung gemäß Fig. 11 dar. Fig. 11 stellt einen Schnitt A-A durch die Darstellung gemäß Fig. 10 dar. Gleiche Ziffern in Fig. 10 und 11 bezeichnen vergleichbare Funktionselemente wie in Fig. 6. Die Relativbewegung der Begrenzungsflächen der Druckentspannungszone 45 kann z.B. (gegebenenfalls zusätzlich) durch einen auf das Gehäuse 41 der Vorrichtung aufgebrachten Ultraschallkristall 49 erzeugt werden.

## Patentansprüche

1. Verfahren zur kontinuierlichen Herstellung von Blockschaum durch Verschäumen einer Kohlendioxid unter Druck gelöst enthaltenden Polyurethan-Reaktivmischung, wobei der Druck der Reaktivmischung beim Durchgang durch eine spaltförmige Entspannungszone abgebaut wird, dadurch gekennzeichnet, daß die Entspannungszone in Form eines oder mehrerer koaxialer Ringspalte (45, 45a, 45b) ausgebildet ist und die Geschwindigkeit der Reaktivmischung nach dem Durchgang durch den oder die Ringspalte in einer oder mehreren koaxialen ringspaltförmigen Geschwindigkeitsreduktionszonen (47, 47a, 47b) reduziert wird.

2. Verfahren nach Anspruch 1, dadurch gekennzeichnet, daß die Strömungsrichtung der Reaktivmischung in der Entspannungszone (45, 45a, 45b) mit der Strömungsrichtung in der Geschwindigkeitsreduktionszone (47, 47a, 47b) einen Winkel von 90 bis 150° bildet.

3. Verfahren nach Anspruch 1 oder 2, dadurch gekennzeichnet, daß die Strömungsrichtung in der Geschwindigkeitsreduktionszone (47, 47a, 47b) im wesentlichen parallel zur Ringspaltachse verläuft.

4. Verfahren nach einem der Ansprüche 1 bis 3, dadurch gekennzeichnet, daß die Spaltbegrenzungsflächen der Entspannungszone (45, 45a, 45b) zumindest zeitweise gegeneinander bewegt werden.

5. Verfahren nach Anspruch 4, dadurch gekennzeichnet, daß die Spaltbegrenzungsflächen gegeneinander rotiert werden.

6. Verfahren nach Anspruch 4, dadurch gekennzeichnet, daß die Bewegung der Spaltbegrenzungsflächen gegeneinander durch Ultraschall erzeugt wird.

7. Verfahren nach Anspruch 4, dadurch gekennzeichnet, daß die Spaltbreite der Entspannungszone kurzzeitig verengt und/oder erweitert wird.

8. Vorrichtung zur kontinuierlichen Herstellung von Blockschaum durch Verschäumen einer Kohlendioxid unter Druck gelöst enthaltenden Polyurethan-Reaktivmischung, enthaltend eine rotationssymmetrische Druckverteilungskammer (43) mit einem oder mehreren koaxialen Austrittsspalten (45, 45a, 45b), wobei die Durchtrittsrichtung der Reaktivmischung durch die Austrittsspalte mit der Achse der Druckverteilungskammer einen Winkel von 90 bis 150° bildet, wobei jeweils eine der Spaltbegrenzungsflächen durch einen innerhalb der Druckverteilungskammer angeordneten rotationssymmetrischen koaxialen Zentralkörper (42) zur Verfügung gestellt wird, und wobei ferner im Anschluß an den oder die Austrittsspalte ein oder mehrere achsenparallele Ringspalte (47, 47a, 47b) mit 8- bis 20-fach größerem Querschnitt als der oder die Austrittspalte vorgesehen sind.

9. Vorrichtung nach Anspruch 8, wobei Mittel zur Bewegung des Zentralkörpers (42) in Achsenrichtung vorgesehen sind.

10. Vorrichtung nach Anspruch 8 oder 9, wobei Mittel zur Rotation des Zentral körpers (42) vorgesehen sind.

## Claims

1. A process for the continuous production of block foam by the foaming of a mixture which reacts to form polyurethane and which contains carbon dioxide dissolved under pressure, wherein the pressure of the reactive mixture is reduced on passing through a pressure reduction zone in the form of an aperture, characterised in that the pressure reduction zone is constructed in the form of one or more coaxial, annular apertures (45, 45a, 45b) and the velocity of the reactive mixture after passing through the annular aperture or apertures is reduced in one or more coaxial velocity reduction zones (47, 47a, 47b) in the form of annular apertures.

2. A process according to claim 1, characterised in that the direction of flow of the reactive mixture in the pressure reduction zone (45, 45a, 45b) forms an angle of 90 to 150° with the direction of flow in the velocity reduction zone (47, 47a, 47b).

3. A process according to claims 1 or 2, characterised in that the direction of flow in the velocity reduction zone (47, 47a, 47b) runs substantially parallel to the axis of the annular aperture.

4. A process according to any one of claims 1 to 3, characterised in that the aperture-delimiting faces of the pressure reduction zone (45, 45a, 45b) are moved at least temporarily in relation to each other.

5. A process according to claim 4, characterised in that the aperture-delimiting faces are rotated in relation to each other.

6. A process according to claim 4, characterised in that the movement of the aperture-delimiting faces in relation to each other is produced by ultrasonics.

7. A process according to claim 4, characterised in that the aperture width of the pressure reduction zone is transiently narrowed and/or widened.

8. A device for the continuous production of block foam by foaming a mixture which reacts to form polyurethane and which contains carbon dioxide dissolved under pressure, containing a rotationally symmetrical pressure distribution chamber (43) having one or more coaxial outlet apertures (45, 45a, 45b), wherein the direction of passage of the reactive mixture through the outlet apertures forms an angle of 90 to 150° with the axis of the pressure distribution chamber, wherein one of the aperture-delimiting faces in each case is provided by a rotationally symmetrical, coaxial, central body (42) which is disposed inside the pressure distribution chamber, and wherein in addition, following the outlet aperture or outlet apertures, one or more axially parallel annular apertures (47, 47a, 47b) are provided which have a cross-section 8 to 20 times larger than that of the outlet aperture or outlet apertures.

9. A device according to claim 8, wherein means are provided for moving the central body (42) axially.

10. A device according to claims 8 or 9, wherein means are provided for the rotation of the central body (42).

## Revendications

1. Procédé de fabrication en continu de mousse en blocs par moussage d'un mélange de réaction de polyuréthanne contenant du dioxyde de carbone dissous sous pression, la pression du mélange de réaction étant réduite par passage à travers une zone de détente en forme de fente, caractérisé en ce que la zone de détente est construite sous la forme d'une ou plusieurs fentes annulaires coaxiales (45, 45a, 45b) et la vitesse du mélange de réaction après le passage à travers la ou les fentes annulaires est réduite dans une ou plusieurs zones de réduction de vitesse (47, 47a, 47b) coaxiales en forme de fentes annulaires.

2. Procédé suivant la revendication 1, caractérisé en ce que la direction d'écoulement du mélange de réaction dans la zone de détente (45, 45a, 45b) forme un angle de 90 à 150° avec la direction d'écoulement dans la zone de réduction de vitesse (47, 47a, 47b).

3. Procédé suivant la revendication 1 ou 2, caractérisé en ce que la direction d'écoulement dans la zone de réduction de vitesse (47, 47a, 47b) est essentiellement parallèle à l'axe de la fente annulaire.

4. Procédé suivant l'une des revendications 1 à 3, caractérisé en ce que les surfaces de limitation de la fente de la zone de détente (45, 45a, 45b) sont déplacées au moins par moment l'une par rapport à l'autre.

5. Procédé suivant la revendication 4, caractérisé en ce que les surfaces de limitation de la fente sont amenées à tourner l'une par rapport à l'autre.

6. Procédé suivant la revendication 4, caractérisé en ce que le mouvement des surfaces de limitation de la fente l'une par rapport à l'autre est généré par ultrasons.

7. Procédé suivant la revendication 4, caractérisé en ce que la largeur de fente de la zone de détente est brièvement rendue plus étroite et/ou élargie.

8. Dispositif de fabrication en continu de mousse en blocs par moussage d'un mélange de réaction de polyuréthanne contenant du dioxyde de carbone dissous sous pression, comprenant une chambre de répartition de la pression (43) à symétrie de révolution avec une ou plusieurs fentes annulaires coaxiales (45, 45a, 45b), la direction d'écoulement du mélange de réaction à travers la fente de sortie formant un angle de 90 à 150° avec l'axe de la chambre de répartition de la pression, une des surfaces de limitation de la fente étant chaque fois constituée par un corps central (42) coaxial à symétrie de révolution disposé à l'intérieur de la chambre de répartition de la pression et une ou plusieurs fentes annulaires (47, 47a, 47b) parallèles à l'axe, d'une section de 8 à 20 fois plus grande que la ou les fentes de sortie étant en outre prévues à la suite de la ou des fentes de sortie.

9. Dispositif suivant la revendication 8, dans lequel des moyens permettant le mouvement du corps central (42) dans la direction de l'axe sont prévus.

10. Dispositif suivant la revendication 8 ou 9, dans lequel des moyens permettant la rotation du corps central (42) sont prévus.
